# FASCICULE DE BREVET EUROPEEN

(11) **EP 2 530 450 B1**
(45) Date de publication et mention de la délivrance du brevet: **11.03.2015**
(21) Numéro de dépôt: 12169808.8
(22) Date de dépôt: 29.05.2012
(51) Int. Cl.: G01N 15/06, B82Y 35/00, G01N 25/48, G01N 1/22, G01N 15/00

(54) **Installation et procédé de caractérisation du risque de relargage de nano-objets**
Vorrichtung und Verfahren für die Charakterisierung des Risikos einer Freisetzung von Nanopartikeln
Device and method for the characterisation of the risk of a liberation of nano-particles

(30) Priorité: 31.05.2011 FR 1154795
(43) Date de publication de la demande: 05.12.2012
(73) Titulaire: Institut National De L'environnement Industriel Et Des Risques, 60550 Verneuil-en-Halatte (FR)
(72) Inventeur: Bouillard, Jacques, 60300 Senlis (FR); Badr, Rmili, 60600 Creil (FR); Frejafon, Emeric, 60340 Villers S/ St Leu (FR); Fleury, Dominique, F-60430 HODENC L'EVEQUE (FR)
(74) Mandataire: Santarelli

(56) Documents cités:
- DOMINIQUE FLEURY ET AL: "Gaseous effluents from the combustion of nanocomposites in controlled-ventilation conditions", NANOSAFE 2010, 16 novembre 2010 (2010-11-16), XP055006596,
- BADR R'MILI ET AL: "Study of nanoparticle collection efficiency of an aspiration-based TEM (Transmission Electron Microscopy) sampler", NANOSAFE 2010, 16 novembre 2010 (2010-11-16), XP055006594,
- CARINE CHIVAS ET AL: "Methodology For Assessing The Impact Of Nanoparticles On Effluents From Fire (Project NANOFEU)", FIRE AND MATERIALS 2009, 26 janvier 2009 (2009-01-26), XP055006605,
- DIDIER CALOGINE ET AL: "The NANOFEU project: Objectives and tools", JOURNAL OF PHYSICS: CONFERENCE SERIES, vol. 170, 1 mai 2009 (2009-05-01), page 012034, XP055006583, ISSN: 1742-6588, DOI: 10.1088/1742-6596/170/1/012034
- JOSÉ BARUCHEL ET AL: 'Some Trends of Synchrotron Radiation X-ray Imaging Some Trends of Synchrotron Some Trends of Synchrotron Radiation X Radiation X - -ray Imaging ray Imaging European Synchrotron Radiation Facility European Synchrotron Radiation Facility', [en ligne] 01 Janvier 2004, XP055096127 Extrait de l'Internet: <URL:http://www.aps.anl.gov/Science/Future/ Workshops/Using_Xray_Imaging/Slides/baruche l.pdf> [extrait le 2014-01-13]

## Description

L'invention concerne la caractérisation du risque de relargage de nano-objets (ex nanoparticules ou nanofibres) par des produits contenant ces dits nano-objets et susceptibles de subir des traitements thermiques, voire une combustion ; elle concerne notamment, mais non exclusivement, la caractérisation du risque de relargage de nano-objets (ex particules, nanofibres) dans les rejets gazeux lors d'un traitement thermique volontaire ou accidentel de produits ou déchets contenant ces nano-objets, notamment par combustion, ou en raison de l'apparition de contraintes thermiques importantes à l'intérieur de ces déchets. Dans le présent contexte, la notion de déchet s'applique à un produit en fin de vie.

Il n'existe pas encore de filière de traitement de déchets bien définie à ce propos.

Dans le domaine du traitement des déchets nanostructurés combustibles par voie thermique (par exemple des nano-composites incorporant une charge de nano-objets (nanoparticules ou nanofibres)), il est de plus en plus nécessaire de pouvoir identifier et quantifier les produits particulaires qui sont présents (ou qui risquent d'être présents) dans la phase gazeuse issue de la combustion de ces déchets. Dans le présent contexte, on dit qu'un produit ou déchet est nanostructuré lorsque ce produit ou déchet contient des nano-objets (particules ou fibres), contribuant à lui conférer une structure, dont l'échelle dimensionnelle est sensiblement inférieure à quelques micromètres.

En d'autres termes, il est de plus en plus nécessaire de pouvoir évaluer le facteur d'émission en nano-objets en cas de combustion incomplète (voire complète) ou de contrainte thermique appliquée à des produits ou déchets. Cela devrait notamment permettre d'appréhender les risques d'exposition qui peuvent résulter de la fabrication de ces matériaux composites (par exemple en cas de production par extrusion, ou de moulage à chaud), ou d'une inflammation accidentelle de produits, ou d'une combustion mal maitrisée de produits en fin de vie.

Ce type d'informations est notamment utile :
- dans les filières de valorisation énergétique de nanodéchets (nanocomposites usagés, matériaux souillés par des nano-objets, etc.),
- dans la conception de systèmes de filtration de fumées susceptibles de contenir de tels nano-objets, par exemple dans les filières de valorisation précitées,
- dans les études de danger ou d'analyse de risques liés à ces matériaux ou substances contenant des nano-objets, l'évaluation du devenir de ceux-ci lors des agressions thermiques (incendie, emballement thermique, contraintes thermiques, etc.) durant leur utilisation.

Ce type d'informations peut en outre contribuer à anticiper et donc minimiser les conséquences d'une exposition accidentelle des personnes et de l'environnement à des rejets de nano-objets (nanoparticules ou nanofibres) résultant de la production, de l'usage ou de la fin de vie des produits contenant ces nano-objets, lorsque ceux-ci sont soumis à des contraintes thermiques ou à une combustion dont les paramètres sont préalablement contrôlés.

Quelques publications ont abordé ce sujet.

On peut citer à ce propos l'article « Characterizing nanoparticle emissions from burning polymer nanocomposites » de M. R. Nyden et al, Nano Science and Technology Institute (NIST), Nanotech 2010 Vol 1, pp. 717-719. Ce document rend compte d'une étude de la combustion de nanocomposites polymériques composés de mousse de polyuréthane (PUF en abrégé) et de 4% en masse de nanofibres de carbone. L'analyse des résidus de combustion a révélé la présence de nanofibres de carbone (CNF en abrégé) mais de telles fibres n'étaient pas présentes dans les fumées ; en d'autres termes, ces nanofibres restaient enchevêtrées dans les résidus de combustion et ne se transféraient pas directement dans la phase gazeuse. Ces expériences ont été faites en suivant la norme NFPA 270, mais cela n'a pas conduit à un transfert de nanofibres dans la phase gazeuse en raison de la haute température des instruments utilisés qui provoquerait la combustion de tels nano-objets susceptibles d'entrer dans la phase gazeuse. Il faut noter que cet article n'a pas décrit de techniques ou de moyens particuliers de mesure de nano-objets dans la phase gazeuse issue de la combustion des nanocomposites.

On connait déjà d'après la présentation de Dominique Fleury et al : « Gaseous effluents from the combustion of nanocomposites in controlled-ventilation conditions », NANOSAFE 2010, 16 novembre 2010 (2010-11-16), une installation permettant une caractérisation du risque de relargage de nanoparticules, comportant un four adapté à contenir un échantillon d'un produit ou déchet, un calorimètre, cette installation étant connectée à un dispositif d'analyse de type spectromètre. Un tel échantillon subit une combustion dans ce four.

L'invention a pour objet de permettre une évaluation du risque de relargage de nano-objets dans l'air ambiant lorsqu'un matériau contenant ces nano-objets est soumis à un traitement thermique (par élévation de température) générant des contraintes thermiques ou impliquant une combustion. Une telle combustion peut être stoechiométrique ou non, par exemple sub-stoechiométrique (ce qui correspond à une combustion incomplète). Pour ce faire, l'invention vise à définir un régime de combustion (constitution de l'installation et méthodologie d'utilisation) choisi en sorte de favoriser un tel relargage à partir de matériaux contenant ces nano-objets et de caractériser ainsi ces nano-objets en continu (en cumulatif), sous une dilution suffisamment faible pour être compatible avec une détection des nanofibres dans les rejets gazeux.

L'invention vise ainsi, notamment, une installation qui, par sa conception, permet de placer le matériau étudié dans un régime de combustion approprié (préférentiellement substoechiométrique), favorisant le relargage de nano-objets dans l'air ambiant à partir de produits ou déchets nanostructurés ; un système de prélèvement bien positionné par rapport à un réacteur contenant un échantillon de ce matériau permet une collecte quantitative de nano-objets en continu et en cumulatif, et en mettant en évidence les nano-objets relâchés dans les gaz.

L'invention vise également, une méthodologie d'utilisation de l'installation permettant de caractériser un risque de relargage associé à un produit étudié.

L'invention propose ainsi une installation de caractérisation du risque de relargage de produits ou de déchets contenant des nano-objets, comportant un four adapté à contenir un échantillon de ce produit ou déchet et un dispositif d'analyse thermique connecté à ce four, cette installation étant adaptée à être connectée à un dispositif d'analyse, caractérisée en ce que le four est adapté à être traversé par un flux gazeux suivant une direction longitudinale de ce four et comporte un premier réceptacle à paroi poreuse adapté à recevoir ledit échantillon de ce produit ou déchet et un second réceptacle à paroi poreuse adapté à recevoir un échantillon de référence qui est inerte vis-à-vis du flux gazeux et est muni d'un dispositif d'analyse thermique différentielle et thermogravimétrique connecté à ces deux réceptacles, cette installation comportant en outre un dispositif d'évacuation et de filtration des rejets gazeux connecté à la sortie du four et capable de retenir d'éventuels nano-objets contenus dans ces rejets gazeux et un dispositif de prélèvement de gaz, adapté à prélever une partie des rejets gazeux et contenant un filtre adapté à permettre une analyse ultérieure d'éventuels nano-objets retenus par ce filtre.

On appréciera qu'une telle installation met en oeuvre un four allongé suivant une direction de circulation d'un flux gazeux, un échantillon du matériau à caractériser et un échantillon témoin pouvant être reçus dans des nacelles poreuses, laissant donc passer le flux vers ces échantillons, et dans ceux-ci lorsque ceux-ci sont pulvérulents, ce qui permet un bon échange entre le matériau à caractériser et le flux gazeux adapté à participer à la combustion, en pratique à base d'oxygène (il s'agit avantageusement d'air, voire d'oxygène pur).

De manière avantageuse, le dispositif de prélèvement comporte un orifice de prélèvement situé à la sortie du four, ce qui permet que le flux prélevé soit raisonnablement représentatif du flux gazeux sortant,

De manière également avantageuse, le filtre du dispositif de prélèvement est une grille de microscope à transmission, adaptée à être introduite dans un microscope à transmission pour ladite analyse ultérieure d'éventuels nano-objets retenus par ce filtre.

De manière préférée, les premier et second réceptacles sont identiques, avec une longueur, parallèlement à la direction longitudinale du four, qui est comprise entre 1 et 2 fois leur largeur moyenne, un écartement latéral compris entre 0.75 et 1.25 fois cette largeur moyenne en étant à une distance de la paroi du four comprise entre 0.5 fois et 1 fois cette largeur moyenne.

De manière également préférée, le four a une section cylindrique, avec un diamètre compris entre 3 et 5 fois la largeur moyenne des réceptacles et une longueur de chauffe comprise entre 12 et 30 fois cette largeur moyenne.

L'invention propose également un procédé de caractérisation du risque de relargage de produits ou de déchets contenant des nano-objets, selon lequel on applique à un échantillon de ce produit ou déchet un traitement thermique dans un four tout en en faisant une analyse thermique, caractérisé en ce que :
- on prépare cet échantillon de produit ou déchet comportant du matériau à caractériser sous une forme poreuse, de préférence pulvérulente, ainsi qu'un échantillon similaire d'un matériau inerte témoin, ne contenant pas de nano-objets,
- on applique à ces échantillons ledit traitement thermique à l'aide du four en présence d'un flux gazeux traversant ces échantillons tout en appliquant une analyse thermique différentielle et thermogravimétrique à ces échantillons,
- on fait passer une partie au moins du flux gazeux ayant circulé dans le four autour et dans les échantillons au travers d'un filtre de mesure lorsqu'on a détecté au moyen de l'analyse précitée un phénomène de combustion au sein d'au moins l'échantillon de matériau à caractériser puis on analyse, par analyse au microscope électronique à transmission, ce qui a ainsi été retenu par ce filtre.

On appréciera qu'ainsi on limite le prélèvement de flux pour le filtrer puis analyser les particules ainsi retenues à une période déterminée en fonction d'informations recueillies à partir de l'analyse thermique différentielle et thermogravimétrique.

De manière préférée, on prépare l'échantillon comportant du matériau à caractériser par broyage en poudre et par mélange avec une poudre d'un matériau inerte. De manière avantageuse, la poudre de matériau inerte avec laquelle la poudre de matériau à caractériser est mélangée est au moins majoritairement (voire complètement) formée de silice.

De manière avantageuse, on prépare l'échantillon comportant du matériau à caractériser sous la forme d'une poudre de granulométrie de moins d'un millimètre de diamètre, comportant au plus 75% en volume de matériau inerte.

De manière avantageuse, le débit du flux gazeux que l'on fait passer au travers d'un filtre est inférieur à 10% du débit de flux gazeux circulant longitudinalement dans le four.

Des caractéristiques et avantages de l'invention ressortent de la description qui suit, donnée à titre d'exemple illustratif non limitatif, en regard des dessins annexés sur lesquels :
- la figure 1 est un schéma de principe d'une installation conforme à l'invention, principalement constituée d'un four et d'un système de prélèvement de rejets gazeux et de filtration,
- la figure 2 est un schéma de principe du four de l'installation de la figure 1,
- la figure 3 est un schéma de principe du système de prélèvement de rejets gazeux de la figure 1,
- la figure 4 est un schéma du détail IV de la figure 3,
- la figure 5 est une vue agrandie du détail V de la figure 4,
- la figure 6 est un organigramme du procédé de caractérisation d'un produit à étudier avec une installation conforme à la figure 1, et
- la figure 7 est un exemple de graphique corrélant le comportement d'un matériau par rapport à celui d'un matériau témoin en cours de combustion.

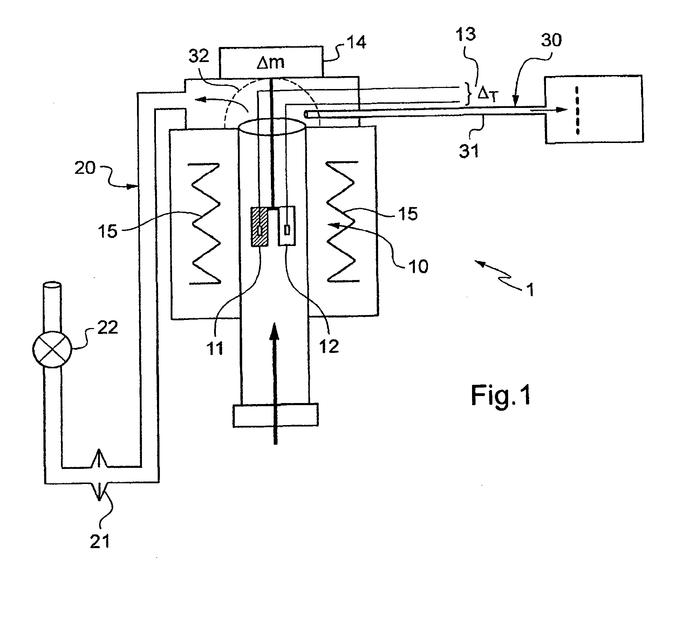

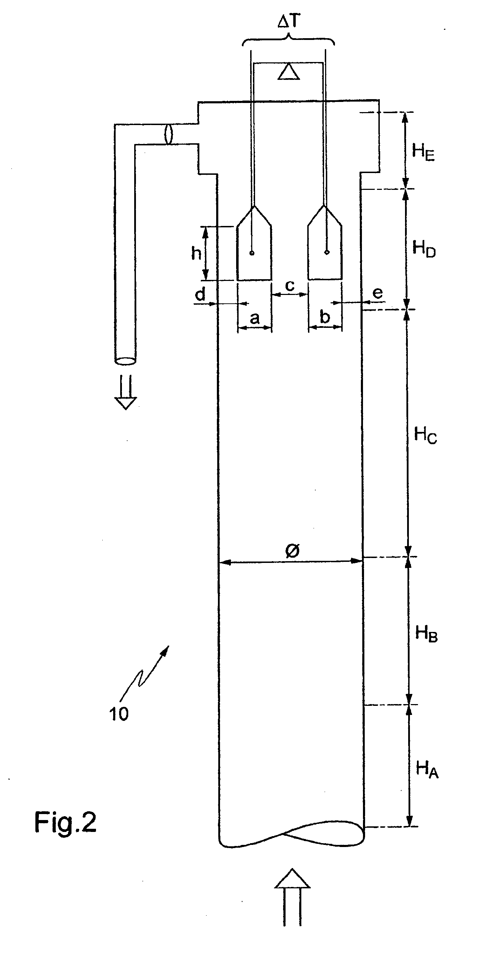

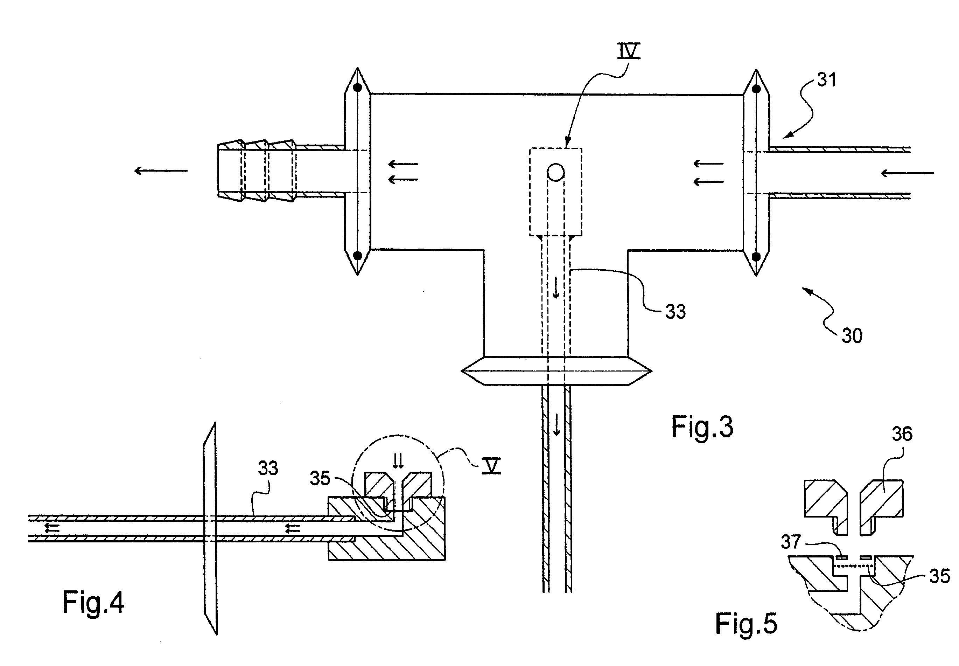

La figure 1 représente, de manière générale, une installation 1 de caractérisation du risque de relargage présenté par un matériau contenant des nano-objets (nanoparticules ou nanofibres), par combustion de ce matériau, comprenant :
- un four noté 10 contenant un premier réceptacle (réacteur) 11 adapté à recevoir un échantillon de ce matériau et un second réceptacle 12 adapté à recevoir un échantillon de référence et muni d'un dispositif d'analyse thermique différentielle et thermogravimétrique 13+14 qui permet de détecter et suivre la réaction d'oxydation (combustion) ; des éléments de chauffe sont schématisés sous la référence 15 ; ce four sera détaillé à propos de la figure 2,
- un dispositif 20 d'évacuation et de filtration des rejets gazeux pour prévenir toute contamination de l'environnement extérieur par ces éléments d'échelle nanométrique, et
- un dispositif de prélèvement 30 qui permet une analyse postérieure des éléments d'échelle nanométrique contenus dans les rejets gazeux de la combustion ; ce système sera détaillé à propos de la figure 3.

Cette installation 1 permet d'identifier la nature des rejets particulaires et d'évaluer le facteur d'émission de ces nano-objets en vue d'analyses de risques ultérieures.

Le dispositif 20 d'évacuation et de filtration des rejets gazeux comporte avantageusement un filtre à haute capacité, voire un filtre absolu (noté 21). Le débit d'évacuation est avantageusement commandé au moyen d'une pompe d'extraction à flux variable 22. A titre d'exemple, le débit nominal est de 440 l/mn.

Le principe de l'invention consiste à mettre, à l'aide d'un four de combustion de dimensions appropriées, le produit contenant des nano-objets dans une phase de combustion naissante qui facilite le transport des nano-objets insérés dans la matrice vers la phase gazeuse circulant dans le four, relargant ainsi en phase gazeuse les produits nanostructurés combustibles, sans les brûler, pour ensuite les analyser grâce au dispositif de prélèvement 30 afin de pouvoir en déduire un facteur d'émission pouvant servir pour l'évaluation des risques.

### Description du four 10

L'élément central de l'installation de la figure 1 est un four de type ATD-ATG, c'est-à-dire un four muni d'un dispositif d'analyse thermique différentielle et d'analyse thermogravimétrique composé de deux réceptacles, l'un servant de réacteur et l'autre inerte servant de référence.

Les réceptacles 11 et 12 sont en pratique des nacelles à paroi poreuse dans lesquelles une masse du matériau à caractériser et une masse égale de matériau de référence (ne contenant pas de nano-objets) sont respectivement introduites sous une forme poreuse, avantageusement sous forme de poudre.

Un flux gazeux oxydant, contenant typiquement de l'oxygène (avantageusement de l'air) circule dans ce four pour participer à la combustion.

Dans le présent contexte, la paroi de la nacelle est poreuse en ce sens qu'elle peut être traversée par un tel flux gazeux circulant dans le four.

Ainsi qu'on le sait, l'analyse thermique permet de suivre l'évolution d'un système chimique subissant une variation de température ; c'est une mesure calorimétrique, puisqu'elle met à profit les effets thermiques, positifs ou négatifs, qui accompagnent cette évolution. L'analyse thermique différentielle couplée à une analyse thermogravimétrique (ATD-ATG) permet d'évaluer l'oxyréactivité d'un produit en mettant en évidence notamment la réaction d'oxydation et caractérisant qualitativement son intensité.

L'évolution de la température d'un échantillon donné permet de mettre en évidence la présence d'une réaction exothermique ou endothermique caractéristique de la réactivité du produit analysé vis-à-vis du gaz réactionnel oxydant, tel que de l'air ou de l'oxygène. Le suivi de la masse de l'échantillon permet de mettre en évidence la formation de produits d'oxydation gazeux (diminution de masse) ou d'oxydes solides (augmentation de masse).

Ce four a toutefois ceci de particulier qu'il est conçu en sorte de permettre une bonne combustion (ou au moins un test thermique) d'un échantillon représentatif d'un nanomatériau, contenant des nano-objets, à caractériser. La géométrie et le dimensionnement des nacelles et du four sont choisis en sorte de permettre le passage du gaz réactionnel (oxygène) avec un bon contact entre ce gaz et le matériau, c'est-à-dire une bonne surface de transfert de phase entre le nanomatériau (son support constitué par la nacelle est inerte) et le gaz réactionnel qui permet le relargage des nano-objets. Le détail du dimensionnement du four sera donné plus loin.

Le four ici considéré peut permettre de mettre en évidence un éventuel phénomène d'auto-échauffement pour un produit testé, et si nécessaire de comparer la réactivité de plusieurs matériaux.

Un échantillon du produit à analyser est placé dans une nacelle à paroi poreuse, tandis qu'une nacelle identique est remplie d'une substance témoin de même poids (inerte vis-à-vis de l'oxygène du gaz réactionnel). Les deux nacelles sont introduites dans un four et soumises à des conditions thermiques identiques, par exemple une augmentation progressive de la température (qui peut de préférence être comprise entre 1 et 10°C/min, par exemple avec une rampe de température nominale de 5°C/min).

La variation de masse de l'échantillon placé dans le four est suivie à l'aide d'une balance électronique en fonction du temps (analyse thermogravimétrique - voir la référence 14). Les températures de l'échantillon et de la substance inerte choisie comme référence sont également enregistrées en fonction du temps (analyse thermique différentielle - voir la référence 13). L'air de balayage, c'est-à-dire le gaz réactionnel, est avantageusement préchauffé à la même température que celle de l'enceinte du four ; le débit de cet air est de préférence compris entre 10 et 500 NI/h, avec par exemple un débit nominal de 440 NI/h. Dans ces conditions, en comparant les températures de l'échantillon et du témoin inerte, il est possible de mettre facilement en évidence de façon semi-quantitative tout phénomène endothermique ou exothermique qui pourrait se produire au cours du chauffage. Le schéma de principe de la structure et du fonctionnement du four ATD-ATG est présenté sur la figure 2.

Les dimensions du four, du réceptacle de l'échantillon et le débit fourni d'air sont des paramètres importants de l'invention, dont une bonne corrélation permet de maximiser le relargage des nano-objets en phase gazeuse lors de la combustion de nanomatériaux ou de nano déchets. On comprend en effet que, plus la caractérisation du risque de relargage est faite dans des conditions favorables à un tel relargage, plus on peut penser que la mesure du risque de relargage en est affinée.

Pour permettre au témoin de jouer un rôle efficace de référence, les nacelles contenant l'échantillon du produit à tester et le matériau témoin sont identiques, typiquement de forme cylindrique.

Si on note r le rayon de ces nacelles, soit 2r le diamètre de celles-ci (donc a=b=2r), il est apparu utile de respecter les conditions suivantes :
- ce rayon est suffisamment petit pour permettre une bonne homogénéité, mais suffisamment important pour qu'un éventuel relargage soit détectable,
- l'écartement c entre ces nacelles est avantageusement compris entre 1.5r et 2.5r (de préférence égal à 2r), de manière à laisser subsister un espace suffisant pour permettre une circulation aisée du gaz réactionnel, tout en garantissant une proximité entre les nacelles qui garantit que le comportement du matériau témoin peut effectivement être considéré comme étant une référence,
- l'écartement d ou e entre ces nacelles et la paroi latérale de la paroi du coeur du four, en pratique une paroi cylindrique, est avantageusement compris entre 0.5r et 1.5r (de préférence égal à la moitié de l'écartement c entre les nacelles, soit r si c=2r), pour permettre un passage aisé du gaz autour des nacelles tout en profitant au mieux de l'apport de calories effectué au travers de cette paroi,
- la paroi interne du four est avantageusement cylindrique avec un diamètre Φ qui est avantageusement compris entre 6r et 10r,
- la hauteur h des nacelles est avantageusement comprise entre 2r et 8r (de préférence 4r), de manière à permettre une pénétration suffisante du gaz réactionnel dans la masse de l'échantillon et celle du témoin, tout en garantissant une bonne homogénéité du comportement dans la totalité du volume de ces nacelles,
- la zone de chauffe du four, c'est-à-dire la portion de la paroi du coeur de four par laquelle un apport de calories est effectué, a une hauteur qui représente avantageusement de 24r à 60r (de préférence 55r), de manière à garantir une bonne homogénéité de la température dans la zone où sont situées les nacelles ; dans l'exemple considéré, cette zone de chauffe comporte une zone de préchauffage B (de hauteur H_{B} par exemple égale à 11 r), puis une zone de chauffage C (de hauteur H_{C} par exemple égale à 33r) dans laquelle la température est contrôlée à une précision donnée (par exemple à un degré près), puis une zone de coeur de chauffe D (de hauteur H_{D} par exemple égale à 11 r) dans laquelle la température est contrôlée de manière plus précise que dans la zone de chauffage (par exemple à 0.5° près),
- les zones du four en amont (A) et en aval (D) de la zone de chauffe ont avantageusement des hauteurs respectives H_{A} et H_{E} représentant de 4r à 20r (de préférence 8r), de manière à rendre aussi régulier que possible l'écoulement du gaz réactionnel dans cette zone de chauffe.

A titre d'exemple, le four d'une installation conforme à l'invention respecte les conditions dimensionnelles suivantes :
Diamètre 2r des nacelles (entre 1 et 3 cm)
Hauteur h des nacelles (entre 3 et 15 cm, plus préférablement 10 cm)
Diamètre interne central Φ du four (2-10 cm, plus préférablement 7 cm)
Hauteur active du four (température homogène : 20-70 cm, préférablement 55 cm)
Rapport de masse entre échantillon et référence de l'ordre de 1.

Lorsque les nacelles ont une section horizontale différente d'un cercle, les relations précitées restent valables en remplaçant r par la moitié de la largeur moyenne de ces nacelles.

Il mérite d'être noté que des fours ATG-ATD classiques comportent des nacelles qui sont généralement pleines et non poreuses (il s'agit en pratique de creusets), avec des dimensions et des positions relatives bien différentes de celles préconisées ci-dessus. Par ailleurs, le four ci-dessus, du fait de la zone amont avant la zone de chauffe, permet un bon contrôle de l'apport du gaz réactionnel (de l'air en pratique ou tout oxydant gazeux) via une ouverture par la base du four, et donc un bon contrôle du régime de combustion (que l'on peut donc choisir comme étant sub-stoechiométrique, dont on comprend qu'il est favorable à un relargage de nanoparticules) ; ce régime de combustion est efficacement contrôlé par convection, alors que les fours classiques n'ont généralement pas d'arrivée d'air contrôlée de sorte que le contrôle de la réaction ne peut y être contrôlée que par la diffusion de l'air ambiant. De plus, la vitesse de circulation du gaz réactionnel peut, selon l'invention, être contrôlée à de l'ordre de quelques cm/sec, ce qui permet au gaz de pénétrer les nacelles et d'uniformiser la température et la réaction de combustion à l'intérieur des nacelles. La masse contenue dans les nacelles, suffisante pour pouvoir générer un relargage détectable et permettre de conférer aux essais un caractère reproductible, est supérieure à ce qui est prévu dans les fours classiques.

Le dimensionnement des fours commerciaux s'est orienté ces dernières années vers des fours et creusets de taille minimale afin de rendre ces outils plus facilement mobiles, déplaçables, réduisant aussi le coût de l'installation. Dans notre invention, nous recherchons le contraire, à savoir une quantité suffisante de produit dans des nacelles qui peuvent générer assez de rejets particulaires afin de pouvoir les analyser de façon reproductible et fiable.

L'homme de métier (dans le domaine des procédés), de par la combustion du produit préconisé, aurait tendance à penser que tout relargage éventuel de produit nanostructuré combustible serait immédiatement brulé dans le four de combustion, comme indiqué d'ailleurs par M. R. Nyden et al. du NIST (voir ci-dessus). Dans la pratique, il est apparu qu'il n'en est rien ; les particules combustibles formées peuvent être relarguées de la matrice sans être brulées, ce qui est bien sûr l'événement central le plus redouté dans l'évaluation du risque sanitaire lié à la combustion de ce type de produits. C'est donc précisément le degré d'émission de nanoparticules ou nanofibres qui est important d'analyser et de quantifier. C'est précisément l'objet de la présente invention.

A titre d'exemple, le dispositif d'évacuation et de filtration des gaz de combustion a un diamètre interne de l'ordre de 90mm (ainsi que cela ressortira plus loin, la grande majorité des gaz de combustion (ici, plus de 90%) est ainsi évacuée.

### Description du système de prélèvement 30

Le système de prélèvement représenté en figure 3 comporte une sonde de prélèvement connue en soi, notamment décrite dans les publications suivantes :
- « A size selective nanoparticle collection device based on diffusion and thermophoresis » de J. Lyyrânen et al., Journal of Physics, Conference séries 170 (2009) 012011
- « Analysis of particle release using LIBS (Laser-Induced Breakdown Spectroscopy) and TEM (Transmission electron Microscopy) samplers when handling CNT (carbon Nanotubes) », de Rmili R. et al, Journal of Nanoparticle Research 2010..

Ce dispositif 30 ne sera donc pas décrit de manière très détaillée ici; il est toutefois indiqué que ce dispositif de prélèvement consiste en un système de prélèvement par aspiration à travers une grille poreuse. Il est composé de :
1- une canne 31 d'aspiration des rejets, connectée à une cellule de prélèvement 32 située à la sortie du four, dans le flux des gaz capté par le dispositif 20, avec un débit d'extraction approprié (par exemple environ 101/min),
2- une canne 33 de prélèvement correctement usinée pour acheminer l'air à travers un filtre 35 avantageusement constitué d'une grille de microscope électronique à transmission (TEM en anglais) poreuse de type « Holey carbon film », connectée à la cellule de prélèvement pour un échantillonnage avec un débit, par exemple de 0.31/min, défini par des expériences préliminaires d'évaluation du caractère opérationnel du dispositif comme étant le débit idéal pour éviter d'endommager la grille TEM et qui permet aussi un prélèvement avec une efficacité optimale.

A titre d'exemple, la canne d'aspiration a un diamètre de 9 mm pour un débit d'aspiration de 101/mn (qui reste ici inférieur à 10% du flux circulant dans le four), tandis que la canne de prélèvement 33 a un diamètre intérieur valant moins que la moitié de celui de la canne d'aspiration (par exemple 4 mm) pour un débit de prélèvement de 0.31/mn (soit de 1 à 10% du débit de la canne d'aspiration).

La figure 4 représente à plus grande échelle l'embout de prélèvement de la canne 33 (cadre IV de la figure 3) et la figure 5 est une vue éclatée du détail V de la figure 4.

La grille 35 est avantageusement maintenue en place de manière amovible, ici au moyen d'une vis papillon 36 coopérant avec un joint 37. A titre d'exemple, le canal intercepté par la grille 35 a un diamètre de 2 mm, tandis que cette grille a un diamètre de 3 mm (voir ci-dessous).

Les flux partiels sortant de la canne d'aspiration ou de la canne de prélèvement sont avantageusement filtrés avant tout rejet dans l'atmosphère.

Les nano-objets présents dans le flux gazeux capté par la canne 31 sont ainsi récoltés sur une grille 35 spécifiquement développée pour permettre une analyse par microscopie électronique à transmission.

Il s'agit d'une grille TEM de diamètre standard (Ø = 3,02 environ mm) constituée d'une grille métallique en cuivre recouverte d'un mince film de carbone amorphe (environ 10 nm) poreux d'une porosité d'environ 10⁸ (pores/cm²) avec un diamètre de pore médian d'environ 500 nm. Ces grilles à base de cuivre sont notamment vendues sous la référence « holey carbon films on 400 mesh grid » par la société Agar Scientific (www.agarscientific.com).

Les sorties de la canne de prélèvement et de la cellule de prélèvement sont ici connectées à des filtres HEPA (High Efficiency Particulate Air) puis ensuite à des pompes de débit respectivement 0.3l/min et 10l/min par exemple.

On comprend que le couplage du dispositif de prélèvement, connu en soi, au four ATD-ATG particulier préconisé par l'invention respecte avantageusement certaines conditions pour permettre à l'installation une caractérisation efficace.

Les dimensions géométriques des cannes de prélèvement, du flux d'extraction généré par la pompe 1 et la position exacte de l'orifice de la canne dans le ciel du four (environ dans une demi-sphère de 10 cm de diamètre au-dessus du cylindre central du four) sont avantageusement choisies avec soin pour la bonne opération de l'invention.

Le dispositif est pourvu d'un système de filtres absolus permettant aux gaz de combustion chargés de nano-objets (nanoparticules ou nanofibres) d'être filtrés avant d'être rejetés dans l'environnement. Des filtres de type HEPA ou ULPA (Ultra Low Particulate Air) peuvent être mis en oeuvre à cet effet. L'efficacité de la filtration dépendra du type de filtre mis en place, devant être dimensionnée pour répondre aux exigences réglementaires prévues par le code de l'environnement.

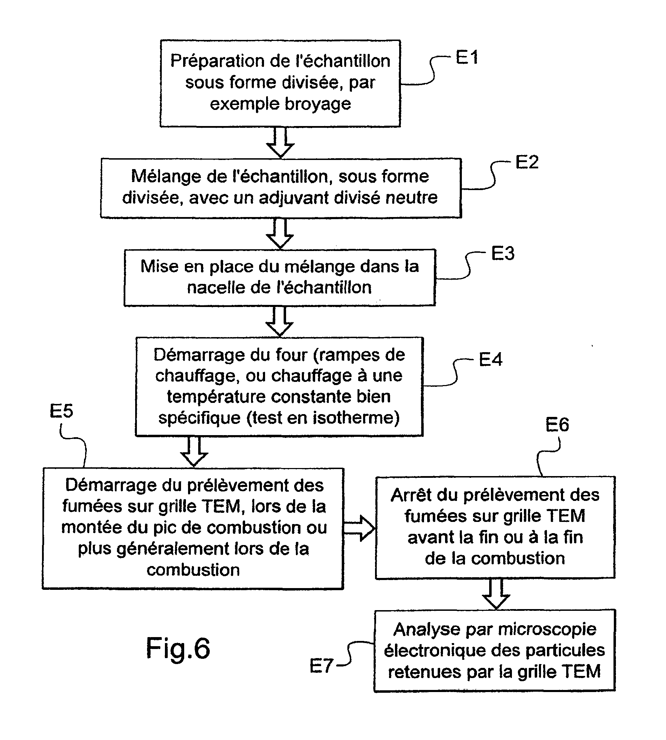

La figure 6 schématise un exemple de mise en oeuvre du procédé de l'invention. Celui-ci comporte trois étapes principales :
- on prépare un échantillon comportant du matériau à caractériser sous une forme poreuse, de préférence pulvérulente, ainsi qu'un échantillon similaire d'un matériau témoin, ne contenant pas de nano-objets,
- on applique à ces échantillons un traitement thermique à l'aide d'un flux gazeux traversant ces échantillons tout en effectuant une analyse thermique différentielle et thermogravimétrique de ces échantillons,
- on fait passer une partie au moins du flux gazeux ayant circulé dans le four autour et dans les échantillons au travers d'un filtre lorsqu'on a détecté au moyen de l'analyse précitée un phénomène de combustion au sein d'au moins l'échantillon de matériau à caractériser puis on analyse par analyse micro-électronique ce qui a ainsi été retenu par ce filtre.

A titre d'exemple, le procédé peut être mis en oeuvre suivant le protocole suivant :
Etape E1 : On broie, si besoin, le matériau à tester jusqu'à le réduire en poudre à une taille choisie (granulométrie moyenne), pouvant varier de quelques nanomètres jusqu'à quelques millimètres (par exemple entre 1 micron et 1 millimètre).
Etape E2 : On mélange la poudre ainsi obtenue avec un adjuvant neutre (non réactif - une alumine ou silice finement divisée de taille avoisinant les 60 microns et à grande surface spécifique est apparue tout à fait appropriée) dans une proportion comprise entre 75% et 10% de poudre à tester. A titre d'exemple précis, l'adjuvant est la terre diatomite (Acros Organics Kieselguhr (ref. Celite 521)) faite d'un solide à base de silice composé de squelettes de petites plantes préhistoriques (elle comprend une proportion significative de cristobalite), ce produit ayant été préalablement incinéré, lavé à l'acide et séché pour détruire toute fraction organique et métallique. Ce procédé permet d'obtenir une silice SiO₂ pure contenant une proportion en silice dépassant 99%.
   Le rôle de l'adjuvant est ici d'augmenter la surface de contact entre le matériau à caractériser (en pratique un polymère) à tester et l'air, et ainsi d'améliorer le transfert massique dû à la combustion entre l'air et le polymère, et d'aider au détachement des nanotubes ou nanoparticules du polymère. Cet adjuvant sert en quelque sorte d'augmentateur de surface et aide à promouvoir le transfert des nano-objets (en pratique des nanotubes) du solide polymérique vers la phase gazeuse. In fine, nous obtenons un rendement en nanotubes qui est suffisant pour une mesure par canne d'extraction sur grille TEM.
Etape E3 : On met en place le mélange dans la nacelle 11 destinée à recevoir l'échantillon de matériau à caractériser ; en parallèle, on met en place un mélange de matériau témoin, inerte vis-à-vis du flux gazeux, par exemple également constitué de silice (il peut s'agir du même matériau que l'adjuvant). La granulométrie des deux échantillons est avantageusement au moins approximativement la même.
Etape E4 : On déclenche le fonctionnement du four, par exemple par une montée progressive de la température, ce qui permet de détecter la température où l'analyse par les dispositifs 13 et 14 détecte un pic de combustion, par comparaison avec le comportement de l'échantillon témoin ; cette montée en température peut correspondre à une rampe de 1° à 10°/mn, par exemple 3°/mn. En variante, on peut mettre en route le four en sorte d'aboutir très rapidement à un palier prédéterminé.
Etape E5 : Durant la montée en température, lorsque le démarrage de combustion est décelé, la mise en marche de la canne d'extraction de flux pour piéger les nanotubes sur grille TEM est déclenchée.
Etape E6 ; L'extraction peut être arrêtée lorsque la température est maximale (haut du pic), afin d'éviter un surnombre de particules (par exemple de la suie) qui pourrait soit colmater la grille de mesure TEM, ou soit décroitre la résolution au TEM de l'identification des nano-objects (nanotubes ou nanoparticules spécifiques) de par une quantité trop importante de cette suie par rapport aux nano-objets recherchés.
Etape E7 : On analyse les particules retenues par le filtre constitué par la grille TEM. On appréciera que, puisque le filtre utilisé est avantageusement une grille TEM, il suffit de placer cette grille dans un microscope électronique à transmission pour introduire les particules retenues dans ce microscope, ce qui minimise les risques de perturbations par l'environnement de la nature et du nombre de ces particules entre la phase de collecte et la phase d'analyse.

### Résultats expérimentaux illustrant l'invention

A titre d'exemple, l'installation de la figure 1 a été utilisée pour caractériser un nanocomposite constitué d'une matrice de matériau plastique (copolymères d'ABS (Acrylonitrile Butadiene Styrene)) avec une charge massique de 3 % de nanotubes de carbone (type MWCNT - MWCNT signifiant « Multi Wall Carbon NanoTube - ou Nanotube de Carbonne à multi feuillets ; catalyseur : Fe ; support de catalyseur : Al) sur une rampe de température allant jusqu'à 700°C. La charge considérée en matrice polymérique dans le réacteur a été d'environ 1 g.

La différence de température entre l'échantillon analysé et le témoin (paramètre ΔT) ainsi que la perte de masse relative Δm ont été représentées en fonction de la température du témoin (T_{ref}) sur la figure 6 (des flèches indiquent l'échelle à laquelle se rattache chaque courbe). L'évolution ΔT(T_{ref}) présente un pic qui traduit une combustion ou emballement de réaction (exothermie) à 400°C (valeur proche de la température de démarrage de combustion de l'ABS). Ce phénomène s'associe à une importante perte de masse qui traduit a priori la formation de produits de la réaction d'oxydation sous une forme volatile (gaz chargé de particules). Au-delà de 420°C, la température de l'échantillon tend vers celle du témoin et la variation de masse relative se stabilise à une valeur vers 0 %, indiquant que tout le matériau a été consommé par combustion.

Des prélèvements effectués sur des grilles TEM de type « holey carbon film» ont permis de mettre en évidence la présence de nanoparticules sous plusieurs formes dans les rejets de l'incinération :
- des paquets (ou pelotes) de nanotubes dont les dimensions avoisinent le micromètre,
- des agglomérats de nanoparticules dans la taille individuelle avoisine 50 nm, et dont la nature chimique peut être déterminée par l'utilisation d'une sonde chimique couplée aux mesures de microscopie électronique par transmission,
- des fibres individuelles de quelques centaines de nanomètres de long, composées de un ou plusieurs nanotubes de carbone que l'on retrouve sur les grilles de prélèvement.

De par les techniques et le protocole décrits plus haut, ces prélèvements permettent d'identifier des fibres isolées composées de quelques nanotubes de carbone sur lesquels sont encore attachés les catalyseurs métalliques et leur support (Fer et Aluminium dans notre cas). La nature des éléments chimiques peut être validée par une sonde chimique couplée à un microscope électronique à transmission ou par analyse LIBS (Laser induced breakdown spectroscopie).

Les nanofibres sont effectivement relarguées lors du processus de combustion. De par leur facteur de forme (40 :1 dans certains cas), ces fibres peuvent présenter un risque significatif pour la santé des personnes lorsqu'elles sont inhalées (C. Lam 2004 ; A.a. Shvedova 2005 ; J. Muller 2008 ; J.P. Ryman-Rasmussen 2009 ; L. Ma-Hock 2009).

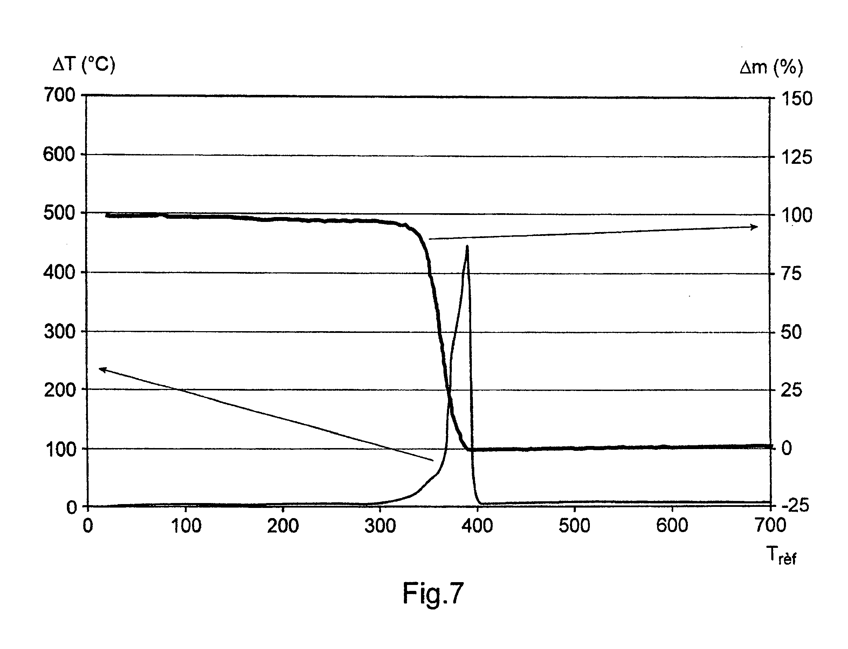

Le diagramme de la figure 7 (ou thermogramme) présente généralement un ou plusieurs pics représentatifs d'une combustion ou de phénomènes exothermiques. La montée ou descente du pic est plus ou moins rapide, dépendant de la réactivité du matériau entrainant une plage de combustion plus ou moins large. Un matériau peu réactif montrera un démarrage ainsi qu'une fin de combustion lents, entrainant une plage de combustion assez large avec un thermogramme de type patatoïde. En figure 7, la température de démarrage de combustion est de 300 °C, et la température de déclenchement des relargages (360 °C) n'est donnée ici que pour une matrice d'ABS chargées de nano-objets bien spécifiques. Pour d'autres types de matériaux, on peut s'attendre à des températures de démarrage de combustion et de relargage différentes ainsi que des plages de températures de combustion différentes

On comprend aisément que la caractérisation que permet l'invention permet d'anticiper les risques de relargage en situation accidentelle ou non-contrôlée ainsi que de définir de manière fiable des traitements adéquats de nanodéchets en fin de vie. Elle peut aussi constituer une aide à la conception des systèmes de filtration utilisés dans les procédés de valorisation énergétiques de nanodéchets (fin de vie). Plus généralement, elle peut constituer une aide aux préventeurs de toute nature. Elle permet en outre, une identification de la présence de nanoparticules/fibres présentes dans les matériaux nanostructurés initiaux.

Les composés qui peuvent être étudiés sont des composés ayant tout type de matrice combustible, naturel (notamment bois, coton, laine, biomasse, textile, etc.) et synthétique (textile, polymère, etc.) ainsi que tout composé métallique renfermant des nano-objets.

### References

Elgrabli D, F. M., Abella-Gallart S, Meunier L, Gamez C, Delalain P, Rogerieux F, Boczkowski J, Lacroix G (2008). "Biodistribution and clearance of instilled carbon nanotubes in rat lung." Part Fibre Toxicol. 5: 20.
A.a. Shvedova, E. R. K., R. Mercer, A.R. Murray, V.J. Johnson, A.I. Potapovich, et al., (2005). "Unusual inflammatory and fibrogenic pulmonary responses to single-walled carbon nanotubes in mice. " American Journal Of Physiology. Lung Cellular And Molecular Physiology 289: L6986708*.*
C. Lam, J. T. J., R. McCluskey, R.L. Hunter, (2004). "Pulmonary toxicity of single-wall carbon nanotubes in mice 7 and 90 days after intratracheal instillation." Toxicological Sciences 77: 126-134*.*
J. Lyyränen, U. B., U. Tapper, A. Auvinen, J. Jokiniemi (2009). "A size selective nanoparticle collection device based on diffusion and thermophoresis." Journal Of Physics: Conference Series. 170: 012011*.*
J. Muller, I. D., P.H. Hoet, N. Lombaert, L. Thomassen, F. Huaux, et al., (2008). "Clastogenic and aneugenic effects of multi-wali carbon nanotubes in epithelial cells." Carcinogenesis. 29: 427-433*.*
J.P. Ryman-Rasmussen, E. W. T., O.R. Moss, M.F. Cesta, B.a. Wong, J.C. Bonner, (2009). "Inhaled multiwalled carbon nanotubes potentiate airway fibrosis in murine allergic asthma. "American Journal Of Respiratory Cell And Molecular Biology 40: 349-358*.*
L. Ma-Hock, S. T., V. Strauss, S. Brill, F. Luizi, M. Mertler, et al., (2009). " Inhalation toxicity of multiwall carbon nanotubes in rats exposed for 3 months. Toxicological Sciences : An Official Journal Of The Society Of Toxicology 112: 4686481.
M. R. Nyden, R. H., Y. S. Kim, R. D.Davis, N. D. Marsh and M. Zammarano (2010). Characterizing particle emissions from Burning Polymer Nanocomposites. NISTI-Nanotech, www.nsti.org*.*
Rmili R., C. D., J.B Sirven, O. Aguerre-Chariol E. Frejafon (2010). "Analysis of particle release using LIBS (Laser-Induced Breakdwn Spectroscopy) and TEM (Transmission electron Microscopy) samplers when handling CNT (Carbon Nanotubes) powders. " Journal of Nanoparticle Research*.*

## Revendications

1. Installation de caractérisation du risque de relargage de produits ou de déchets contenant des nano-objets, comportant un four (10) adapté à contenir un échantillon de ce produit ou déchet et un dispositif d'analyse thermique connecté à ce four, cette installation étant adaptée à être connectée à un dispositif d'analyse, **caractérisée en ce que** le four est adapté à être traversé par un flux gazeux suivant une direction longitudinale de ce four et comporte un premier réceptacle (11) à paroi poreuse adapté à recevoir ledit échantillon de ce produit ou déchet et un second réceptacle (12) à paroi poreuse adapté à recevoir un échantillon de référence qui est inerte vis-à-vis du flux gazeux et est muni d'un dispositif d'analyse thermique différentielle et thermogravimétrique (13, 14) connecté à ces deux réceptacles, cette installation comportant en outre un dispositif (20) d'évacuation et de filtration des rejets gazeux connecté à la sortie du four et capable de retenir d'éventuels nano-objets contenus dans ces rejets gazeux et un dispositif (30) de prélèvement de gaz, adapté à prélever une partie des rejets gazeux et contenant un filtre (35) adapté à permettre une analyse ultérieure d'éventuels nano-objets retenus par ce filtre.

2. Installation selon la revendication 1, dont le dispositif (30) de prélèvement comporte un orifice de prélèvement situé à la sortie du four (10).

3. Installation selon la revendication 1 ou la revendication 2, dont le filtre (35) du dispositif de prélèvement est une grille de microscope à transmission, adaptée à être introduite dans un microscope à transmission pour ladite analyse ultérieure d'éventuels nano-objets retenus par ce filtre.

4. Installation selon l'une quelconque des revendications 1 à 3, dans lequel les premier et second réceptacles (11, 12) sont identiques, avec une longueur, parallèlement à la direction longitudinale du four, qui est comprise entre 1 et 2 fois leur largeur moyenne, un écartement latéral compris entre 0.75 et 1.25 fois cette largeur moyenne en étant à une distance de la paroi du four comprise entre 0.5 fois et 1 fois cette largeur moyenne.

5. Installation selon l'une quelconque des revendications 1 à 4, dont le four (10) a une section cylindrique, avec un diamètre compris entre 3 et 5 fois la largeur moyenne des réceptacles et une longueur de chauffe comprise entre 12 et 30 fois cette largeur moyenne.

6. Procédé de caractérisation du risque de relargage de produits ou de déchets contenant des nano-objets, selon lequel on applique à un échantillon de ce produit ou déchet un traitement thermique dans un four tout en en faisant une analyse thermique, **caractérisé en ce que** :
- on prépare (E1) cet échantillon de produit ou déchet comportant du matériau à caractériser sous une forme poreuse, de préférence pulvérulente, ainsi qu'un échantillon similaire d'un matériau inerte témoin, ne contenant pas de nano-objets,
- on applique (E4) à ces échantillons ledit traitement thermique à l'aide du four en présence d'un flux gazeux traversant ces échantillons tout en appliquant une analyse thermique différentielle et thermogravimétrique à ces échantillons,
- on fait passer une partie au moins du flux gazeux ayant circulé dans le four autour et dans les échantillons au travers d'un filtre de mesure (E5) lorsqu'on a détecté au moyen de l'analyse précitée un phénomène de combustion au sein d'au moins l'échantillon de matériau à caractériser puis on analyse par analyse au microscope électronique (E7) ce qui a ainsi été retenu par ce filtre.

7. Procédé selon la revendication 6, selon lequel on prépare l'échantillon comportant du matériau à caractériser par broyage en poudre et par mélange (E2) avec une poudre d'un matériau inerte.

8. Procédé selon la revendication 7, dans lequel la poudre de matériau inerte avec laquelle la poudre de matériau à caractériser est mélangée est au moins majoritairement formée de silice.

9. Procédé selon l'une quelconque des revendications 6 à 8, dans lequel on prépare l'échantillon comportant du matériau à caractériser sous la forme d'une poudre de granulométrie moyenne de moins d'un millimètre de diamètre, comportant au plus 75% en volume de matériau inerte.

10. Procédé selon l'une quelconque des revendications 6 à 9, dans lequel le débit du flux gazeux que l'on fait passer au travers d'un filtre est inferieur à 10% du débit de flux gazeux circulant longitudinalement dans le four.

## Patentansprüche

1. Anlage für die Charakterisierung des Risikos der Freisetzung von Produkten oder Abfällen, die Nanoobjekte enthalten, die einen Ofen (10), der angepasst ist, um eine Probe dieses Produkts oder Abfalls zu enthalten und eine mit diesem Ofen verbundene Vorrichtung für eine thermische Analyse aufweist, wobei diese Anlage angepasst ist, um mit eine Analysevorrichtung verbunden zu sein, **dadurch gekennzeichnet, dass** der Ofen angepasst ist, um durch einen Gasstrom gemäß einer Längsrichtung dieses Ofens durchquert zu werden und einen ersten Behälter (11) mit poröser Wand, der zum Empfang der Probe dieses Produkts oder Abfalls geeignet ist, und einen zweiten Behälter (12) mit poröser Wand, der zum Empfang einer Referenzprobe geeignet ist, die gegenüber dem Gasstrom inert ist, aufweist und mit einer Vorrichtung für eine thermische Differential- und thermogravimetrische Analyse (13, 14) ausgestattet ist, die mit diesen beiden Behältern verbunden ist, wobei diese Anlage ferner eine Ableitungs- und Filtrationsvorrichtung (20) der Abgase aufweist, die mit dem Ausgang des Ofens verbunden ist und imstande, eventuelle, in diesem Abgasen enthaltene Nanoobjekte zurückzuhalten, und eine Gasentnahmevorrichtung (30), die angepasst ist, um einen Teil der Abgase zu entnehmen und einen Filter (35) enthält, der angepasst ist, um eine spätere Analyse eventueller, von diesem Filter zurückgehaltener Nanoobjekte zu erlauben.

2. Anlage nach Anspruch 1, wobei die Entnahmevorrichtung (30) eine Entnahmeöffnung aufweist, die sich am Ausgang des Ofens (10) befindet.

3. Anlage nach Anspruch 1 oder Anspruch 2, wobei der Filter (35) der Entnahmevorrichtung ein Transmissionsmikroskopgitter ist, das angepasst ist, um für die spätere Analyse eventueller, von diesem Filter zurückgehaltener Nanoobjekte in ein Transmissionsmikroskop eingesetzt zu sein.

4. Anlage nach einem der Ansprüche 1 bis 3, wobei der erste und zweite Behälter (11, 12) identisch sind mit einer Länge parallel zur Längsrichtung des Ofens zwischen 1 und 2 Mal inklusive ihrer mittleren Breite, einem seitlichen Abstand zwischen 0,75 und 1,25 Mal inklusive dieser mittleren Breite und in einer Distanz von der Wand des Ofens zwischen 0,5 Mal und 1 Mal inklusive dieser mittleren Breite.

5. Anlage nach einem der Ansprüche 1 bis 4, wobei der Ofen (10) einen zylindrischen Querschnitt hat mit einem Durchmesser zwischen 3 und 5 Mal inklusive der mittleren Breite der Behälter und einer Heizlänge zwischen 12 und 30 Mal inklusive dieser mittleren Breite.

6. Verfahren für die Charakterisierung des Risikos der Freisetzung von Produkten oder Abfällen, die Nanoobjekte enthalten, wobei auf eine Probe dieses Produkts oder Abfalls eine thermische Behandlung in einem Ofen bei Durchführung einer thermischen Analyse durchgeführt wird, **dadurch gekennzeichnet, dass**:
- diese Produkt- oder Abfallprobe, die zu charakterisierendes Material in einer porösen, vorzugsweise pulverförmigen Form, enthält, sowie eine ähnliche Probe eines inerten Kontrollmaterials, das keine Nanoobjekte enthält, vorbereitet wird (E1),
- auf diese Proben die thermische Behandlung mit Hilfe des Ofens bei Anwesenheit eines Gasstroms, der diese Proben bei Anwendung einer thermischen Differential- und thermogravimetrischen Analyse auf diese Proben durchquert, angewendet wird (E4),
- mindestens ein Teil des Gasstroms, der in dem Ofen um und in den Proben zirkuliert ist, durch einen Messfilter (E5) geschickt wird, wenn mit Hilfe der vorgenannten Analyse eine Verbrennungserscheinung in mindestens einer zu charakterisierenden Materialprobe festgestellt wird, und durch Analyse mit den elektronischen Mikroskop analysiert wird (E7), was dadurch durch diesen Filter zurückgehalten wurde.

7. Verfahren nach Anspruch 6, wobei die Probe, die das zu charakterisierende Material enthält, durch pulverförmiges Zerkleinern und durch Mischen (E2) mit einem Pulver eines inerten Materials hergestellt wird.

8. Verfahren nach Anspruch 7, wobei das inerte Pulvermaterial, mit dem das Pulver des zu charakterisierenden Materials gemischt wird, mindestens mehrheitlich von Kieselerde gebildet ist.

9. Verfahren nach einem der Ansprüche 6 bis 8, wobei die Probe, die zu charakterisierendes Material aufweist, in Form eines Pulvers mit einer durchschnittlichen Korngröße von weniger als einem Millimeter Durchmesser, das höchsten 75 Vol.-% inertes Material aufweist, vorbereitet wird.

10. Verfahren nach einem der Ansprüche 6 bis 9, wobei der Durchsatz des Gasstroms, der durch einen Filter geleitet wird, kleiner als 10% des Durchsatzes des Gasstroms ist, der längs in dem Ofen zirkuliert.

## Claims

1. An installation to characterize the risk of release of products or waste containing nano-objects, comprising a furnace (10) adapted to contain a sample of this product or waste and a thermal analysis device connected to this furnace, this installation being adapted to be connected to an analysis device, **characterized in that** the furnace is adapted so that a gaseous flow can pass through it in a longitudinal direction of this furnace, and comprises a first porous-walled holder (11) adapted to receive the said sample of this product or waste and a second porous-walled holder (12) adapted to receive a control sample which is inert against the gaseous flow, and is provided with a differential thermal analysis and thermogravimetric analysis device (13, 14) connected to these two holders, this installation further comprising a gas discharge evacuation and filtering device (20) connected to the outlet of the furnace and capable of retaining any nano-objects contained in these gaseous discharges, and a gas sampling device (30) adapted to sample part of the gaseous discharges and containing a filter (35) adapted to allow subsequent analysis of any nano-objects retained by this filter.

2. The installation according to claim 1, wherein the sampling device (30) comprises a sampling orifice located at the outlet of the furnace (10).

3. The installation according to claim 1 or claim 2, wherein the filter (35) of the sampling device is a grid of a transmission microscope adapted to be inserted in a transmission microscope for said subsequent analysis of any nano-objects retained by this filter.

4. The installation according to any of claims 1 to 3, wherein the first and second holders (11, 12) are identical having a length parallel to the longitudinal direction of the furnace of between 1 and 2 times their mean width, the distance between their sides being between 0.75 and 1.25 times this mean width and being positioned at a distance from the wall of the furnace of between 0.5 and 1 time this mean width.

5. The installation according to any of claims 1 to 4, wherein the furnace (10) has a cylindrical cross-section with a diameter between 3 and 5 times the mean width of the holders and a heating length of between 12 and 30 times this mean width.

6. A method for characterizing the risk of release of products or waste containing nano-objects according to which heat treatment is applied to a sample of this product or waste in a furnace whilst conducting thermal analysis, **characterized in that**:
- a sample of this product or waste is prepared (E1) comprising material to be **characterized in** porous form, preferably powder form, and a similar sample of an inert control material not containing any nano-objects;
- the said heat treatment is applied (E4) to these samples in the furnace in the presence of a gas flow passing through these samples, whilst performing differential thermal analysis and thermogravimetric analysis on these samples;
- at least part of the gas flow having circulated in the furnace around and in the samples is passed through a measuring filter (E5) if the aforementioned analysis has detected a phenomenon of combustion within at least the sample of material to be characterized, after which the filter retentate is analysed (E7) under an electronic microscope.

7. The method according to claim 6, wherein the sample comprising material to be characterized is prepared by crushing to a powder and mixing (E2) with a powder of an inert material.

8. The method according to claim 7, wherein the powder of inert material mixed with the powder of material to be characterized is at least predominantly formed of silica.

9. The method according to any of claims 6 to 8, wherein the sample comprising material to be characterized is prepared in the form of a powder having a mean particle size of less than one millimetre in diameter, comprising no more than 75 % by volume of inert material.

10. The method according to any of claims 6 to 9, wherein the flow rate of the gas caused to pass through a filter is 10 % lower than the flow rate of gas circulating longitudinally inside the furnace.
